# EUROPEAN PATENT SPECIFICATION

(11) **EP 3 107 041 B1**
(45) Date of publication and mention of the grant of the patent: **23.05.2018**
(21) Application number: 15001783.8
(22) Date of filing: 16.06.2015
(51) Int. Cl.: G06K 19/073, G06K 19/077

(54) **PORTABLE DATA CARRIER**
TRAGBARER DATENTRÄGER
SUPPORT DE DONNÉES PORTABLE

(43) Date of publication of application: 21.12.2016
(73) Proprietor: Giesecke+Devrient Mobile Security GmbH, 81677 München (DE)
(72) Inventor: Finkenzeller, Klaus, 85774 Unterföhring (DE); Tea, Vui Huang, SE-12061 Stockholm (SE)

(56) References cited:
- FR-A1- 2 936 075
- FR-A1- 2 988 500
- US-A1- 2003 161 200

## Description

### Technical Field

The present invention relates to the field of portable data carriers. In particular data carriers in the format of a credit card, wherein the data carrier is adapted to store information thereon in a secure element and wherein the data carrier is adapted to carry out a contactless communication with a reader for contactless portable data carriers.

The contactless communication may be carried out, for instance, according to the ISO/IEC 14443 standard.

### Related prior art

According to the state of the art, portable data carriers are known with which it is possible to carry out a contactless communication with a reader for contactless portable data carriers. The communication can be carried out according to the ISO/IEC 14443 standard over a typical distance of up to 100mm at an operating frequency of 13,56MHz.

Such portable data carriers are being used as credit cards, debit cards, hotel room access cards, membership cards, public transport tickets, etc. When establishing a communication with a reader for contactless portable data carriers, in general, the portable data carrier is activated by a radio frequency operating field of the reader for contactless portable data carriers. Subsequently, the portable data carrier waits for a first command from the reader for contactless portable data carriers. As soon as the first command is sent, the portable data carrier and the reader for contactless portable data carriers start to exchange information (data).

One disadvantage currently associated with portable data carriers is the limited functionality of such data carriers, i.e. each data carrier has only one function. For example, if a data carrier is associated to a credit card issuing authority, the data carrier will only serve as credit card and cannot be used for other purposes, such as entering a hotel room.

The document FR2936075A1 discloses a portable data carrier having a substantially flat shape (1), comprising:a metal layer (p. 10, 1. 25, layer 4 on the figures) in between a first antenna layer (6, 8) arranged adjacent to the metal layer and a second antenna layer (6, 8) arranged adjacent to the opposite side of the metal layer;wherein the first antenna layer comprises a first antenna (5, 5') adapted to carry out a contactless communication;wherein the second antenna layer comprises a second antenna (5, 5') adapted to carry out a contactless communication;wherein at least one processing unit (2), in particular a secure element comprising the processing unit, is provided, wherein the at least one processing unit is in communication with the first antenna and/or the second antenna (claim 1).

### Summary of the invention

It is an object of the invention to provide a portable data carrier as well as a system comprising a reader for contactless portable data carriers and a portable data carrier which are adapted to overcome the disadvantages of the prior art and which offer an extended usability.
This object is solved with a portable data carrier as well as with a system according to the independent claims. Advantageous embodiments are recited in the independent claims.
The invention is based on the idea of improving and enhancing the functionality of a portable data carrier by associating to each side of the data carrier a different mode of usage.
In this regard the portable data carrier having a substantially flat shape comprises a metal layer in between a first ferrite layer and a second ferrite layer, wherein a first antenna layer is arranged adjacent to the first ferrite layer on a side of the first ferrite layer opposite to the side of the metal layer, wherein a second antenna layer is arranged adjacent to the second ferrite layer on a side of the second ferrite layer opposite to the side of the metal layer, wherein the first antenna layer comprises a first antenna adapted to carry out a contactless communication, wherein the second antenna layer comprises a second antenna adapted to carry out a contactless communication, wherein at least one processing unit, in particular a secure element comprising the processing unit, is provided, wherein the at least one processing unit is in communication with the first antenna and/ or the second antenna.

In the meaning of the invention, a "metal layer" is a flat layer in the shape of the data carrier. The "metal layer" is substantially continuous and adapted to impede magnetic field lines from reaching directly through the metal layer. A classic metal layer could be, for instance, copper, aluminum, gold plated copper, and iron. Alternative metal layers can be envisaged. The thickness of a layer could be 30 µm.

According to the invention, a "ferrite layer" is a layer in which magnetic field lines can be conducted/ transmitted. A "ferrite layer" can be magnetized or attracted to a magnet und is electrically nonconductive, wherein the ferrite's high resistivity prevents eddy currents in the core. Examples of ferrite comprise, but are not limited to, iron oxide Fe₂O₃ and magnetite Fe₃O₄. As ferrites are generally known in the prior art, a detailed description is omitted.

According to the invention an "antenna layer" is a layer adapted to accommodate an antenna, wherein the antenna is adapted to carry out a contactless communication according to, for instance, the IS/IEC 14443A standard (NFC). The antenna layer could comprise, but is not limited to, polyvinylchloride (PVC), polyamide, etc.

The processing unit, in particular the secure element comprising a processing unit, is adapted to act similar to the processing unit of a conventional credit card, a hotel room access card, a public transport ticket card or the like. In particular, the processing unit may store confidential data and perform computing operations.

The data carrier according to the invention is advantageously adapted to change its functionality depending on the side of the data carrier that is presented to a reader for contactless portable data carriers. For instance, if the first antenna layer is presented to the reader and if the first antenna layer is closer to the reader than the second antenna layer, the reader will carry out a communication with the first antenna. In particular, since the metal layer impedes magnetic field lines from penetrating through the metal layer, a magnetic field is not established on the other side of the metal layer. However, due to the first ferrite layer being present on the side of the card comprising the first antenna, the magnetic field (i.e. the magnetic field lines) runs through the first ferrite layer. The magnetic field in the first ferrite layer is strong enough to provide the first antenna with energy to supply the processing unit with electric energy. If the other side, i.e. the second side of the data carrier is presented to the reader, only the second ferrite layer is provided with electric energy and hence only the second antenna is provided with energy. Hence, with a data carrier according to the invention it is advantageously possible to choose between two functionalities of the data carrier by changing the side of the data carrier that is being presented to the reader for contactless portable data carriers.

According to an embodiment of the invention, an adhesive is provided between the metal layer and the first and/or second ferrite layer. Hence, it is advantageously possible to enhance the adhesion between the metal layer and the ferrite layers. Thus, the durability of the data carrier is enhanced.

The adhesive layer can be provided between any other of the remaining layers.

In a further embodiment of the invention, a resin layer is provided between the metal layer and the first and/or the second ferrite layer, wherein the resin layer comprises at least one of: polyvinylchloride, polyester and/or polycarbonate. Moreover, a resin layer can be provided between the first antenna layer and the first ferrite layer, wherein the resin layer comprises at least one of: polyvinylchloride, polyester and/or polycarbonate. In addition, a resin layer is provided between the second antenna layer and the second ferrite layer, wherein the resin layer comprises at least one of: polyvinylchloride, polyester and/or polycarbonate. By applying a resin layer, the flexibility and durability of the data carrier can be advantageously enhanced.

According to yet another embodiment, the contactless communication is carried out according to ISO/IEC 14443 at 13,56 MHz and/or any other NFC and/or non-NFC transmission frequency. Hence a suitable and widespread standard is used. Alternatively, any other suitable contactless communication standard can be used.

Further, the processing unit may comprise a first and a second processing unit, wherein the first processing unit is in communication with the first antenna and the second processing unit is in communication with the second antenna. As such, it is advantageously possible to separate the two functionalities of the data carrier from each other, since the first processing unit is only supplied with energy from the first antenna and the second processing unit is only supplied with energy from the second antenna. Through the separation of the two functionalities from each other, different functionalities, such as a credit card functionality and a debit card functionality or a credit card functionality and a hotel room card functionality, with different security requirements can be realized in one card.

Moreover, the portable data carrier may be in the format ID-1 according to ISO/IEC 7810, 7813, and 7816. Alternatively, the portable data carrier may have any other format, including even non card-shaped formats as long as there is a metal layer in between the first and the second ferrite layer. For instance, the portable data carrier may be in the format of an amulet of charm to be carried around the neck of a person.

According to another aspect of the invention, as already mentioned above, the metal layer is adapted to substantially prevent magnetic field lines sent out from a reader, in particular a reader for contactless portable data carriers, to penetrate trough the metal layer. In this regard, the metal layer may be adapted to substantially prevent magnetic field lines to penetrate from one side of the metal layer to the other side of the metal layer. Hence, it is advantageously possible to change the functionality of the data carrier depending on the side of the data carrier being presented to the reader for contactless portable data carriers.

The advantageous aspects of the invention may also be realized in a system comprising a reader for contactless portable data carriers and a portable data carrier. Thus, depending on the side of the portable data carrier being presented to the reader, the portable data carrier will carry out a different functionality.

### Brief description of the drawings

Fig. 1 depicts a first and a second side of a portable data carrier according to an embodiment of the invention.
Fig. 2 depicts a sectional view through the layers of a data carrier according to an embodiment of the invention.
Fig. 3 shows a simplified drawing of a system comprising a reader for contactless portable data carriers and a portable data carrier according to the invention.

### Description of preferred embodiments of the invention

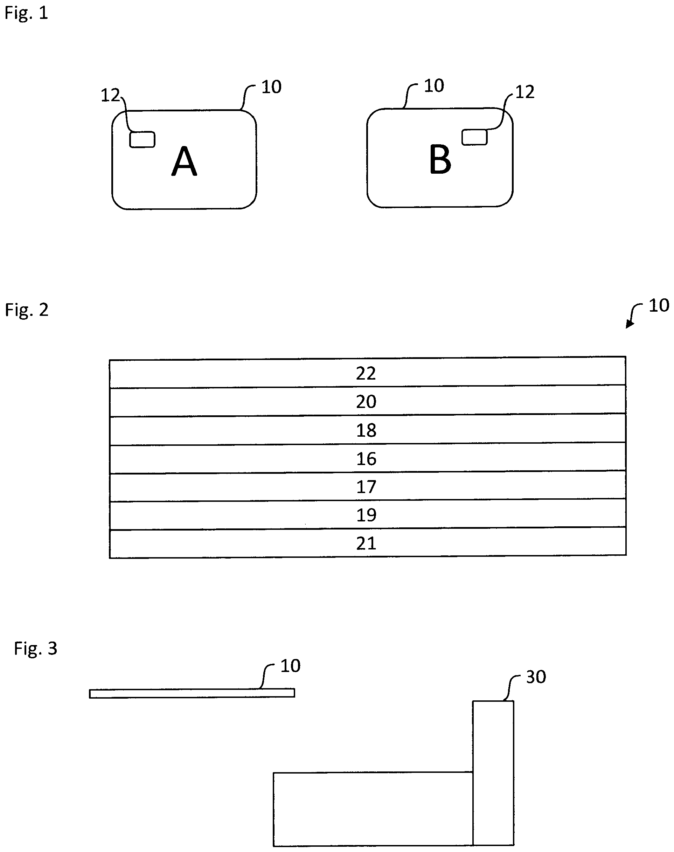

In the following exemplary embodiments of the invention will be described with reference to Fig. 1 to 3. It does not have to be mentioned that the concept of the invention is not limited to the embodiments described as well as the embodiments shown in the drawings. Instead, the person skilled in the art will recognize that various modifications are possible within the scope of the appended claims.

Fig. 1 shows a portable data carrier 10 according to an embodiment of the invention. In Fig. 1 a first side "A" and a second side "B" of the portable data carrier 10 is depicted, wherein the first side "A" is a front side and the second side "B" is a back side of the portable data carrier 10.

The portable data carrier 10 is provided with a processing unit 12, wherein the processing unit 12 is provided with a contact portion for contacting a terminal. In addition, the processing unit 12 is adapted to carry out contactless transactions, for instance a payment transaction, a hotel room access transaction, etc. Although, in Fig. 1, the processing unit 12 is provided with the contact portion for contacting a terminal, it also possible to provide the data carrier 10 with a processing unit 12 that is adapted to carry out a contactless communication only.

Fig. 2 shows a sectional view of the data carrier 10. The data carrier 10 comprises a metal layer 16 between a first ferrite layer 17 and a second ferrite layer 18. Adjacent to the first ferrite 17 layer (on the opposite site of the metal layer 16), in the embodiment shown, is a first antenna layer 19 comprising a first antenna (not shown). Adjacent to the second ferrite layer 18 (on the opposite site of the metal layer 16) is a second antenna layer 20 comprising a second antenna (not shown). Adjacent the first 19 and the second 20 antenna layer is a first cover layer 21 and a second cover layer 22.

In comparison to the area covered by the first ferrite layer 17 and the second ferrite layer 18, the size of the metal layer 16 is at least the size of the ferrite layers 17,18. However, it is also possible that the size of the metal layer 16 is smaller than the size of the ferrite layers 17,18.

It is also possible to vary the thicknesses of the metal layer 16 as well as of the ferrite layers 17,18. In a preferred embodiment, the ferrite layers 17, 18 have a permeability of µᵣ>10, preferably µᵣ>100. The larger the value of permeability is, the thinner the thickness of the ferrite layer 17, 18 may be.

In particular, the sizes and thicknesses of the ferrite layers 17, 18 and the metal layer 16 may be varied as long as the magnetic field lines can be impeded from penetrating through the data carrier 30 whenever the data carrier 30 is placed on a reader (30), described with respect to Fig. 3.

In Fig. 2 only layers 16 to 22 are shown. However, in between each layer further layers can be provided. For instance, an adhesive layer can be provided between the metal layer 16 and the first 17 and/or the second 18 ferrite layer. Moreover, an adhesive layer can be provided between each layer. The adhesive can be activated by heat during manufacture, in particular during lamination, of the data carrier 10.

In addition and/or alternatively, a resin layer can be provided between the metal layer 16 and the first 1 and/or the second 18 ferrite layer. In addition and/or alternatively, a resin layer can be provided between the first ferrite layer 17 and the first antenna layer 19 and/or between the second ferrite layer 18 and the second antenna layer 20. The resin layer may comprise, but is not limited to, polyvinylchloride, polyester, polycarbonate and/or mixtures thereof. The resin layer may increase the flexibility of the data carrier.

Fig. 3 shows a schematic view of a data carrier 10 being presented to a reader 30 for contactless portable data carriers. According to ISO/IEC 14443A the distance between data carrier 10 and reader 30 should be less than 100mm so that the reader 30 is able to transmit sufficient energy to one of the antenna layers 19, 20. The preferred communication frequency between the reader 30 and the data carrier 10 is 13.56 MHz (NFC, near field communication). Other frequencies are of course possible.

When presenting the data carrier 10 to the reader 30, one of the "flat" surfaces, i.e. the surface of the first side of the data carrier (being the side closer to the first cover layer 21) or the surface of the second side of the data carrier (being the side closer to the second cover layer 22), is placed on and/or in close proximity to the reader 30.

The reader 30 establishes an electromagnetic field comprising electromagnetic field lines which are adapted to supply the antenna of a conventional data carrier with electric energy sufficient energy to operate the processing unit 12. As the data carrier 10 according to the invention is provided with two antenna layers 19, 20, it is necessary to provide only the antenna layer being in closer proximity to the reader 30 with enough energy to operate the processing unit 12. The other antenna layer, i.e. the antenna layer being further away from the reader 30, should be provided with significantly less energy or no energy at all.

Due to the metal layer 16 of the data carrier 10, magnetic field lines can be impeded from reaching and/or penetrating through the data carrier 10. In the ferrite layer 17, 18 (close to the reader 30), however, the magnetic field lines can advance and hence cause the effect of a magnetic field and, thus, provide the antenna of the antenna layer 19, 20 that is located between the reader 30 and the metal layer 16, with electric energy.

Hence, depending on the side of the data carrier 10 being "presented" to the reader 30, either the antenna of the first 19 or of the second 20 antenna layer can be provided with energy. Depending on the side of the data carrier 10 being presented to the reader 30, the first or the second antenna is provided with energy. Thus, by providing either of the antennas with energy, the data carrier 10 can carry out a different functionality. For instance, one side of the data carrier could have a credit card functionality and the other side could have a debit card functionality. Alternative configurations comprising, for instance, a hotel room access functionality, a membership functionality, a customer reward functionality, are possible.

According to another embodiment, each the first antenna of the first antenna layer 19 is connected to the first processing unit 12 and the second antenna layer 20 is connected to a second processing unit (not shown). The first processing unit 12 and the second processing unit may be configured as two separate units that are not in communication with each other. Alternatively, the two processing units may be in communication with each other, for instance, via wireless means and/or a wired link.

By providing the data carrier 10 with two separate processing units, it is possible to provide at least two different "functionalities" in one data carrier 10 and to provide a strict separation between the two "functionalities". Thus, the first processing unit 12 could have implemented a high level of security, in particular with respect to hacker attacks, wherein the second processing unit could have implemented a lower level of security. Alternatively, both security levels of the processing units could be identical.

A system according to the invention comprises the data carrier 10 and the reader 30.

According to a further embodiment, the reader 30 may be used to perform a motion detection of the data carrier 10. The reader 30 may use a sensing device to measure the field strength. The device observes a decrease/ increase of field strength to interpret a speed and moving direction of the data carrier 10 towards or away from the reader 30. Hence, the reader 30 may use the speed at which the data carrier 10 is presented to the reader 30 to perform a predetermined action.

For instance, when the card is presented to the reader at a certain approaching velocity, the reader 30 may display a detailed user information.

If the data carrier 10 is presented at a higher speed, the reader 30 may display a (shorter) summary of the user information. In contrast, if the data carrier 10 is moved away from the reader 30, the data carrier 10 can be marked as suspicious, the transaction could be canceled, etc. depending on the speed at which the data carrier 10 is moved away.

## Claims

1. Portable data carrier (10) having a substantially flat shape, comprising:
a metal layer (16) in between a first ferrite layer (17) and a second ferrite layer (18);
wherein a first antenna layer (19) is arranged adjacent to the first ferrite layer (17) on a side of the first ferrite layer (17) opposite to the side of the metal layer (16);
wherein a second antenna layer (20) is arranged adjacent to the second ferrite layer (18) on a side of the second ferrite layer (18) opposite to the side of the metal layer (16);
wherein the first antenna layer (19) comprises a first antenna adapted to carry out a contactless communication;
wherein the second antenna layer (20) comprises a second antenna adapted to carry out a contactless communication;
wherein at least one processing unit (12), or a secure element comprising the processing unit (12), is provided, wherein the at least one processing unit is in communication with the first antenna and/or the second antenna.

2. Portable data carrier according to claim 1, **characterized in that** an adhesive is provided between the metal layer (16) and the first (17) and/or the second (18) ferrite layer.

3. Portable data carrier according to claim 1 or 2, **characterized in that** a resin layer is provided between the metal layer (16) and the first (17) and/or the second (18) ferrite layer, wherein the resin layer comprises at least one of: polyvinylchloride, polyester and/or polycarbonate.

4. Portable data carrier according to one of the preceding claims, **characterized in that** a resin layer is provided between the first antenna layer (19) and the first ferrite layer (17), wherein the resin layer comprises at least one of: polyvinylchloride, polyester and/or polycarbonate.

5. Portable data carrier according to one of the preceding claims, **characterized in that** a resin layer is provided between the second antenna layer (20) and the second ferrite layer (18), wherein the resin layer comprises at least one of: polyvinylchloride, polyester and/or polycarbonate.

6. Portable data carrier according to one of the preceding claims, adapted such that said contactless communication can be carried out according to ISO/ IEC 14443 at 13,56 MHz and/or any other NFC and/or non-NFC transmission frequency.

7. Portable data carrier according to one of the preceding claims, **characterized in that** the processing unit (12) comprises a first and a second processing unit, wherein the first processing unit is in communication with the first antenna and the second processing unit is in communication with the second antenna.

8. Portable data carrier according to one of the preceding claims, **characterized in that** the portable data carrier (10) is in the format ID-1 according to ISO/IEC 7813.

9. Portable data carrier according to one of the preceding claims, **characterized in that** the metal layer (16) is adapted to substantially prevent magnetic field lines to penetrate trough the metal layer.

10. Portable data carrier according to claim 10, wherein the metal layer (16) is adapted to substantially prevent magnetic field lines to penetrate from one side of the metal layer (16) to the other side of the metal layer (16).

11. Portable data carrier according to one of the preceding claims, wherein the data carrier (10) is adapted to carry out a different functionality depending on which side of the data carrier, in particular the side with the first antenna or the side with the second antenna, is presented to a reader.

12. System comprising a reader (30) for contactless portable data carriers and a portable data carrier (10) according to one of the preceding claims.

## Patentansprüche

1. Tragbarer Datenträger (10) mit einer im Wesentlichen flachen Form, umfassend:
eine Metallschicht (16) zwischen einer ersten Ferrit-Schicht (17) und einer zweiten Ferrit-Schicht (18);
wobei eine erste Antennenschicht (19) benachbart zu der ersten Ferrit-Schicht (17) auf einer der Seite der Metallschicht (16) gegenüberliegenden Seite der ersten Ferrit-Schicht (17) angeordnet ist;
wobei eine zweite Antennenschicht (20) benachbart zu der zweiten Ferrit-Schicht (18) auf einer der Seite der Metallschicht (16) gegenüberliegenden Seite der zweiten Ferrit-Schicht (18) angeordnet ist;
wobei die erste Antennenschicht (19) eine erste Antenne umfasst, die dazu eingerichtet ist, eine kontaktlose Kommunikation durchzuführen;
wobei die zweite Antennenschicht (20) eine zweite Antenne umfasst, die dazu eingerichtet ist, eine kontaktlose Kommunikation durchzuführen;
wobei wenigstens eine Verarbeitungseinheit (12) oder ein die Verarbeitungseinheit (12) umfassendes Sicherheitselement vorgesehen ist, wobei die wenigstens eine Verarbeitungseinheit mit der ersten Antenne und/oder der zweiten Antenne in Kommunikation steht.

2. Tragbarer Datenträger nach Anspruch 1, **dadurch gekennzeichnet, dass** ein Kleber zwischen der Metallschicht (16) und der ersten (17) und/oder der zweiten (18) Ferrit-Schicht vorgesehen ist.

3. Tragbarer Datenträger nach Anspruch 1 oder 2, **dadurch gekennzeichnet, dass** eine Harzschicht zwischen der Metallschicht (16) und der ersten (17) und/oder der zweiten (18) Ferrit-Schicht vorgesehen ist, wobei die Harzschicht wenigstens eines von Polyvinylchlorid, Polyester und/oder Polycarbonat umfasst.

4. Tragbarer Datenträger nach einem der vorhergehenden Ansprüche, **dadurch gekennzeichnet, dass** eine Harzschicht zwischen der ersten Antennenschicht (19) und der ersten Ferrit-Schicht (17) vorgesehen ist, wobei die Harzschicht wenigstens eines von Polyvinylchlorid, Polyester und/oder Polycarbonat umfasst.

5. Tragbarer Datenträger nach einem der vorhergehenden Ansprüche, **dadurch gekennzeichnet, dass** eine Harzschicht zwischen der zweiten Antennenschicht (20) und der zweiten Ferrit-Schicht (18) vorgesehen ist, wobei die Harzschicht wenigstens eines von Polyvinylchlorid, Polyester und/oder Polycarbonat umfasst.

6. Tragbarer Datenträger nach einem der vorhergehenden Ansprüche, derart eingerichtet, dass die genannte kontaktlose Kommunikation gemäß ISO/IEC 14443 bei 13,56 MHz und/oder einer anderen NFC und/oder nicht-NFC Übertragungsfrequenz durchgeführt werden kann.

7. Tragbarer Datenträger nach einem der vorhergehenden Ansprüche, **dadurch gekennzeichnet, dass** die Verarbeitungseinheit (12) eine erste und eine zweite Verarbeitungseinheit umfasst, wobei die erste Verarbeitungseinheit mit der ersten Antenne in Kommunikation steht und die zweite Verarbeitungseinheit mit der zweiten Antenne in Kommunikation steht.

8. Tragbarer Datenträger nach einem der vorhergehenden Ansprüche, **dadurch gekennzeichnet, dass** der tragbare Datenträger (10) im ID-1-Format nach ISO/IEC 7813 ausgebildet ist.

9. Tragbarer Datenträger nach einem der vorhergehenden Ansprüche, **dadurch gekennzeichnet, dass** die Metallschicht (16) eingerichtet ist, im Wesentlichen zu verhindern, dass magnetische Feldlinien durch die Metallschicht hindurchtreten.

10. Tragbarer Datenträger nach Anspruch 10, wobei die Metallschicht (16) eingerichtet ist, im Wesentlichen zu verhindern, dass Magnetfeldlinien von einer Seite der Metallschicht (16) zu der anderen Seite der Metallschicht (16) hindurchtreten.

11. Tragbarer Datenträger nach einem der vorhergehenden Ansprüche, wobei der Datenträger (10) eingerichtet ist, eine unterschiedliche Funktionalität auszuführen, abhängig davon, auf welcher Seite des Datenträgers, insbesondere die Seite mit der ersten Antenne oder die Seite mit der zweiten Antenne, einem Lesegerät präsentiert wird.

12. System umfassend ein Lesegerät (30) für kontaktlose tragbare Datenträger und einen tragbaren Datenträger (10) gemäß einem der vorhergehenden Ansprüche.

## Revendications

1. Support de données portable (10) présentant une forme en grande partie plate, comprenant :
une couche métallique (16) entre une première couche de ferrite (17) et une seconde couche de ferrite (18) ;
dans lequel une première couche d'antenne (19) est agencée de manière adjacente à la première couche de ferrite (17) sur un côté de la première couche de ferrite (17) face au côté de la couche métallique (16) ;
dans lequel une seconde couche d'antenne (20) est agencée de manière adjacente à la seconde couche de ferrite (18) sur un côté de la seconde couche de ferrite (18) face au côté de la couche métallique (16) ;
dans lequel la première couche d'antenne (19) comprend une première antenne apte à réaliser une communication sans contact ;
dans lequel la seconde couche d'antenne (20) comprend une seconde antenne apte à réaliser une communication sans contact ;
dans lequel il est prévu au moins une unité de traitement (12) ou un élément sécurisé comprenant l'unité de traitement (12), dans lequel la au moins une unité de traitement est en communication avec la première antenne et/ou la seconde antenne.

2. Support de données portable selon la revendication 1, **caractérisé en ce qu'**un adhésif est prévu entre la couche métallique (16) et les première (17) et/ou seconde (18) couches de ferrite.

3. Support de données portable selon la revendication 1 ou 2, **caractérisé en ce qu'**une couche de résine est prévue entre la couche métallique (16) et les première (17) et/ou seconde (18) couches de ferrite, dans lequel la couche de résine comprend au moins un des. éléments suivants : du polychlorure de vinyle, du polyester et/ou du polycarbonate.

4. Support de données portable selon l'une quelconque des revendications précédentes, **caractérisé en ce qu'**une couche de résine est prévue entre la première couche d'antenne (19) et la première couche de ferrite (17), dans lequel la couche de résine comprend au moins un des éléments suivants : du polychlorure de vinyle, du polyester et/ou du polycarbonate.

5. Support de données portable selon l'une quelconque des revendications précédentes, **caractérisé en ce qu'**une couche de résine est prévue entre la seconde couche d'antenne (20) et la seconde couche de ferrite (18), dans lequel la couche de résine comprend au moins un des éléments suivants : du polychlorure de vinyle, du polyester et/ou du polycarbonate.

6. Support de données portable selon l'une quelconque des revendications précédentes, adapté de telle sorte que ladite communication sans contact peut être réalisée conformément à l'ISO/IEC 14443 à 13,56 MHz et/ou toute autre fréquence de transmission NFC (Near Field Communication, communication en champ proche) et/ou non NFC.

7. Support de données portable selon l'une quelconque des revendications précédentes, **caractérisé en ce que** l'unité de traitement (12) comprend des première et seconde unités de traitement, dans lequel la première unité de traitement est en communication avec la première antenne, et la seconde unité de traitement est en communication avec la seconde antenne.

8. Support de données portable selon l'une quelconque des revendications précédentes, **caractérisé en ce que** le support de données portable (10) se présente sous le format ID-1 conformément à l'ISO/IEC 7813.

9. Support de données portable selon l'une quelconque des revendications précédentes, **caractérisé en ce que** la couche métallique (16) est apte à empêcher en grande partie que des lignes de champ magnétique ne pénètrent dans la couche métallique.

10. Support de données portable selon la revendication 10, dans lequel la couche métallique (16) est apte à empêcher en grande partie que des lignes de champ magnétique ne pénètrent d'un côté de la couche métallique (16) à l'autre côté de la couche métallique (16).

11. Support de données portable selon l'une quelconque des revendications précédentes, dans lequel le support de données (10) est apte à réaliser une fonctionnalité différente en fonction du côté du support de données, en particulier le côté équipé de la première antenne ou le côté équipé de la seconde antenne, qui est présenté à un lecteur.

12. Système comprenant un lecteur (30) pour des supports de données portables sans contact et un support de données portable (10) selon l'une quelconque des revendications précédentes.
